(19) **Europäisches Patentamt**
**European Patent Office**
**Office européen des brevets**

(11) **EP 1 447 797 B1**

(12) **EUROPEAN PATENT SPECIFICATION**

(45) Date of publication and mention
of the grant of the patent:
**15.08.2007 Bulletin 2007/33**

(51) Int Cl.:
*G11B 7/007* *(2006.01)*    *G11B 7/0045* *(2006.01)*

(21) Application number: **04002914.2**

(22) Date of filing: **10.02.2004**

(54) **Optical disk and optical disk apparatus**

Optische Platte und Apparat hierzu

Disque optique et appareil de disque optique

(84) Designated Contracting States:
**DE FR GB**

(30) Priority: **12.02.2003 JP 2003034113**
**04.04.2003 JP 2003102020**

(43) Date of publication of application:
**18.08.2004 Bulletin 2004/34**

(73) Proprietor: **KABUSHIKI KAISHA TOSHIBA**
**Tokyo (JP)**

(72) Inventors:
• **Tanaka, Masahiko**
**c/o Toshiba Corporation**
**Minato-ku**
**Tokyo 105-8001 (JP)**

• **Ohsawa, Hideaki**
**c/o Toshiba Corporation**
**Minato-ku**
**Tokyo 105-8001 (JP)**
• **Ogawa, Akihito**
**c/o Toshiba Corporation**
**Minato-ku**
**Tokyo 105-8001 (JP)**
• **Morishita, Naoki**
**c/o Toshiba Corporation**
**Minato-ku**
**Tokyo 105-8001 (JP)**

(74) Representative: **Henkel, Feiler & Hänzel**
**Patentanwälte**
**Maximiliansplatz 21**
**80333 München (DE)**

(56) References cited:
**EP-A- 1 178 471      US-B1- 6 487 152**

**Description**

The present invention relates to an optical disk and an optical disk apparatus which can record, erase, and reproduce optimal information in an information recording medium capable of recording, erasing, and reproducing the information using a laser light beam.

An optical disk used as an information recording medium includes a read-only type optical disk typified by a CD and DVD-ROM, a write-once optical disk typified by a CD-R and DVD-R, a rewritable optical disk typified by an external memory of a computer and a recording/reproducing video disk, and the like.

In the various types of optical disk, an infrared laser beam is used for a CD family disk apparatus and a red laser beam is used for a DVD family disk apparatus. Therefore, a decrease in a focusing spot diameter by changing the laser beam wavelength to the shorter wavelength results in necessity of a process of optimizing recording power having different values depending on a structure or a concentration of a recording layer of the optical disk in each optical disk, when the information is recorded.

In Jpn. Pat. Appln. KOKAI Publication No. 5-290383, it is proposed that recording power information best suited to an optical disk and/or historical information in manufacturing are recorded in a recording area of the optical disk by magneto-optical recording.

In recent years, in order to correspond to rapid increase in recording capacity required in information-related instruments and broadcast-related instruments, the increase in the recording capacity is demanded in the optical disk. Thus, while the research is going on to decrease the focusing spot dimaeter by changing the laser beam wavelength to the shorter wavelength, or to utilization of a super-resolution technology, a mastering technology such as electron beam exposure has been studied in order to shorten a track pitch and mark pit pitch.

For example, with reference to the shortening the laser wavelength, development of a device using a blue-violet laser having a wavelength of 405 nm is already in progress.

In the invention disclosed in Jpn. Pat. Appln. KOKAI Publication No. 5-290383, when information is recorded by an optical disk apparatus, in an optical disk having a CD-MO format, the information can be recorded at the optimum recording power without being governed by the difference in the structure or the concentration of a recording layer.

However, when information is recorded at high density with a laser beam having a focusing spot which is further decreased by using a laser beam having the shorter wavelength such as a blue-violet laser, the optimum recording can not be performed from various factors except the recording power.

For example, in the case where the blue-violet laser beam having a wavelength of 405 nm is used, it is well know that the characteristics of individual optical head are changed and the spot diameter of the laser beam is varied by one of all influences of variations in wavelength of a laser beam emitted from a laser device, variations in spread angle of the outgoing beam, a fluctuation in wavelength of the laser beam caused by a change in temperature, the fluctuation in optical characteristics of an objective lens caused by the change in temperature, and the like.

EP-A-11178471 discloses an optical information recording medium is composed of a pit recording area, wherein various control information is recorded by a prepit, and an user recording area having a guide groove formed in a groove format, and a phase depth for the prepit and the groove are approximately the same that the phase depth is less than or equal to $\lambda$/10, wherein $\lambda$ is a wavelength for reproducing light source. A recording/reproducing apparatus for the optical information recording medium is composed of decoding means for decoding information by detecting a tangential push-pull reproduced signal from the prepit recording area and detecting an aggregated signal from the user recording area. Insofar this document discloses an optical disk according to the precharacterizing part of claim 1.

US-6,487,152 discloses a further method for recording information on an optical disk. This document discloses RIM intensities as control parameters for the recording process of an optical disk. This document furthermore suggests to carry out a test recording step for determining the optimal parameters for recording.

According to the present invention the above object is achieved by an optical disk according to claim 1, by a method for reproducing data from an optical disk according to claim 3, by a method for recording data on an optical disk according to claim 4 and by an optical disk apparatus according to claim 5. The dependent claim is directed to a further advantageous aspect of the present invention.

The invention can be more fully understood from the following detailed description when taken in conjunction with the accompanying drawings, in which:

FIG. 1 is a schematic view illustrating an optical disk to which an embodiment of the invention is applied;
FIGS. 2A to 2K are schematic views illustrating a process for manufacturing the optical disk shown in FIG. 1;
FIG. 3 is a schematic view illustrating an example of an optical head of an optical disk apparatus which records information in the optical disk shown in FIG. 1 and reproduces the information from the optical disk;
FIG. 4 is a block diagram illustrating an example of a signal processing system (the optical disk apparatus) in which a signal obtained by the optical head shown in FIG. 3 is processed;
FIG. 5 is a graph illustrating a relationship between an RIM value and recording power;

FIGS. 6A and 6B are explanatory views of recording data density in each area of the optical disk;

FIG. 7 is an explanatory view of an arrangement and a data structure in a data lead-in area and a system lead-in area of the optical disk;

FIG. 8 is an explanatory view illustrating an arrangement example of data of a control data zone in the lead-in area shown in FIG. 7;

FIGS. 9A to 9D are schematic views illustrating an example of information recorded in the lead-in area shown in FIG. 7;

FIGS. 10A to 10C are schematic views illustrating a relationship between information concerning intensity of a light beam to be recorded in the lead-in area shown in FIGS. 9A to 9D and a light beam (writing pulse) which is output in order to actually record the information in the optical disk; and

FIG. 11 is a schematic view illustrating the relationship between the information concerning intensity of the light beam to be recorded in the lead-in area shown in FIGS. 9A to 9D and the light beam (writing pulse) which is output in order to actually record the information in the optical disk.

Referring to the accompanying drawings, a preferred embodiment of the invention will be described below.

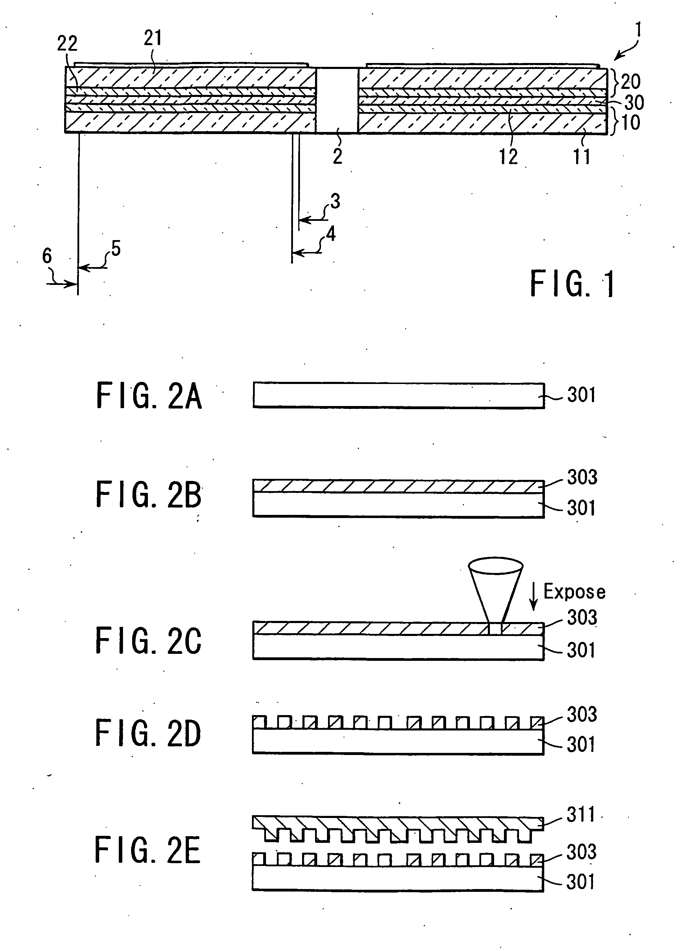

FIG. 1 is a sectional view illustrating a recording medium to which an embodiment of the invention can be applied.

As shown in FIG. 1, an optical disk 1 which is a recording medium includes a first substrate 10, a second substrate 20 which has a structure substantially equal to the first substrate, and a bonding layer 30 which bonds the first substrate 10 and the second substrate 20. A recording layer on which it is possible to record, erase, and reproduce information with a beam spot obtained by condensing a laser beam having a wavelength of, for example, 405 nm is formed in the first substrate 10.

A central hole 2 having a diameter of 15 mm is formed in the center of the optical disk, that is, of the first substrate 10 and the second substrate 20. The first substrate 10 and the second substrate 20 have a diameter of 120 mm, respectively, and an overall thickness of the disk 1 including the bonding layer 30 is approximately 1.2 mm.

The first substrate 10 has a base material 11 and an information recording layer 12 formed thereon, and the second substrate 20 has a base material 21 and an information recording layer 22 formed thereon. The second substrate 20 is bonded so that the information recording layer 22 of the second substrate 20 is opposite to the first substrate 10. The bonding layer 30 and the base material 11 of the first substrate 10 have a characteristic in which at least the laser beam having the wavelength of 405 nm can be transmitted through the bonding layer 30 and the base material 11 to reach the information recording layer 22 of the second substrate 20 with the laser beam having predetermined intensity.

A calibration and/or program memory area 3, a lead-in area 4, a memory area 5, and a lead-out area 6 are formed in order toward an outer periphery from, for example, the center hole 2 at a predetermined position in an area direction of the first substrate 10 and the second substrate 20. Citing the disk having the 120 mm-outer diameter as an example, physical sizes of the lead-in area 4, the memory area 5, and the lead-out area 6 are 50 mm, 116 mm, and 118 mm in diameter, respectively.

In the optical disk 1, preferable information concerning recording power is previously recorded in, for example, the lead-in area 4 in the form described later such that the information concerning the recording power reflects the consideration of any one or all of influences of variations in divergence angle of the laser beam output from a laser device, variations in wavelength of each laser device, a shift in wavelength of the laser beam caused by a change in temperature, optical characteristics of an objective lens of an optical disk apparatus, or the like in the case of the use of the blue-violet laser having the wavelength of 405 nm.

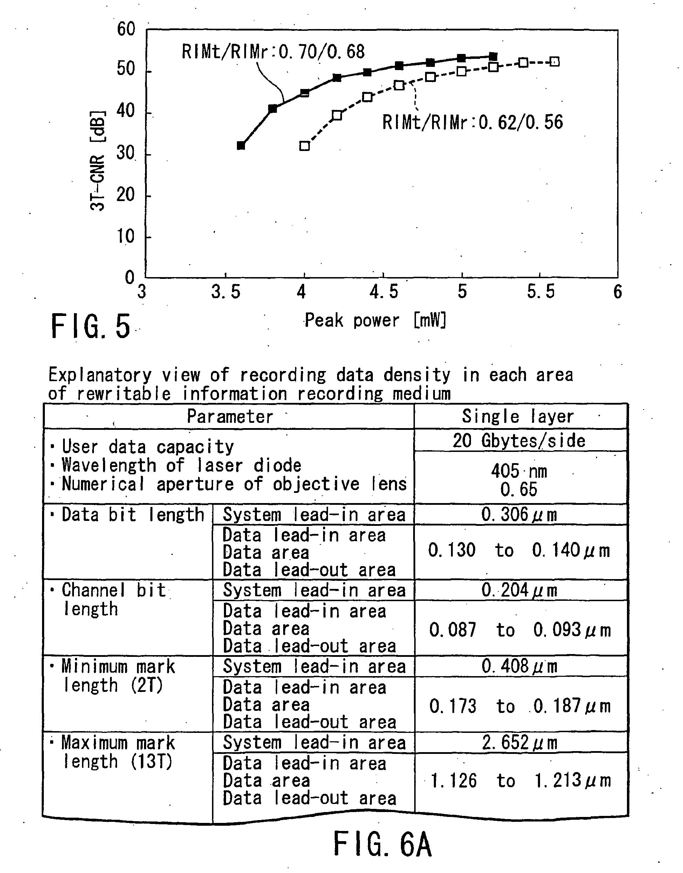

With reference to the information concerning the characteristics of the optical head concerning the record, there is rim intensity (hereinafter referred to as RIM value) showing a relationship between a numerical aperture NA of the objective lens and an intensity distribution of the laser beam, which are used in a pickup of the optical disk apparatus, as described below referring to FIG. 5.

The RIM value is one which is a ratio (or percentage) of light intensity at an aperture edge of the objective lens to central intensity of the light beam for the light beam incident to the objective lens, and the RIM value is one of parameters expressing the optical characteristics of the light beam incident to the objective lens.

For example, in the optical disk apparatus, a diameter R which can be focused by the objective lens is obtained by the following equation:

$$R = 2 \times f(RIM) \times \lambda/NA$$

wherein f(RIM) is a function for the RIM value.

Although the objective lens substantially has a round shape, the light beam, in particular the laser beam from a semiconductor laser device is divergent and a sectional shape of the beam spot is elliptical, so that the RIM value is also defined by expressing $RIM_X$ when the consideration of a directional property is particularly required.

For example, in the case of RIM (no directional property) = 0.6, wavelength $\lambda$ = 405 nm, and NA = 0.65, the beam radius R is 0.5260 $\mu$m. In the case of RIM (no directional property) = 0.7, wavelength $\lambda$ = 405 nm, and NA = 0.65, the beam radius R is 0.5218 $\mu$m.

In the optical disk apparatus, since the light beam (laser beam) from the semiconductor laser device is divergent and the light beam is also used for a collimating lens in addition to the objective lens, the RIM value depends on a spread angle of the laser beam, a focal distance of the collimating lens, and characteristics of a beam shaping prism described later.

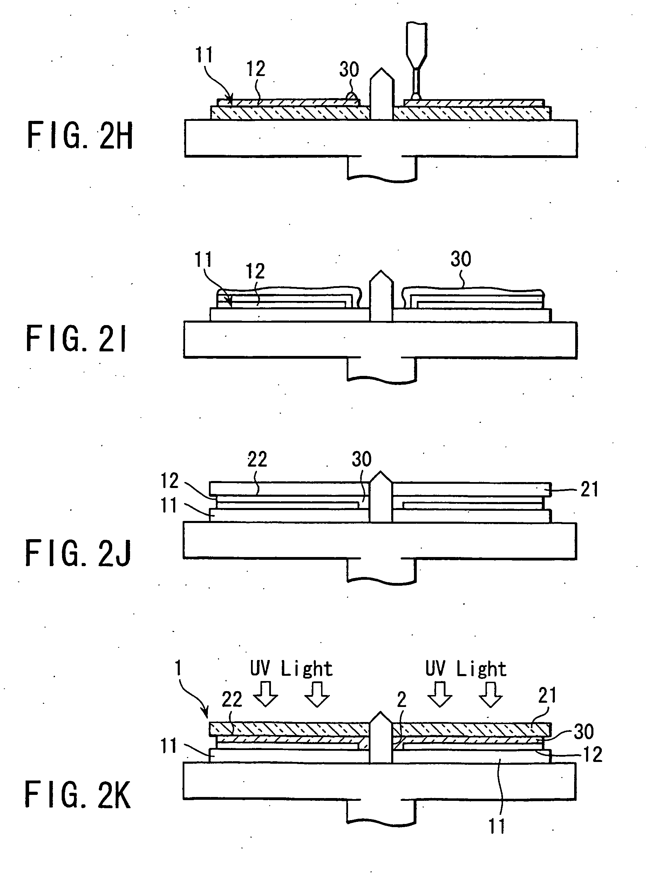

FIGS. 2A to 2K are schematic views illustrating a process for manufacturing the optical disk shown in FIG. 1.

As shown in FIG. 2A, at first glass whose surface is polished to predetermined surface roughness and cleaned is prepared as a master disk 301.

As shown in FIG. 2B, a photoresist 303 is applied to the surface of the glass master disk 301.

As shown in FIG. 2C, the photoresist 303 is exposed with the laser beam having the predetermined wavelength to record physical information (header), a guide groove (projection and depression), and the like in a region corresponding to the memory area 5 and to record initial information (however not described in detail) and the information concerning the recording power in the region corresponding to the calibration and/or program memory area 3 and the lead-in area 4, respectively.

Projections and depressions shown in FIG. 2D are obtained by developing the glass master disk 301 in which the physical information, the initial information, and the information concerning the recording power are recorded and removing a non-developed part of the photoresist.

As shown in FIG. 2E, a stamper 311 is obtained by plating the glass master disk 301.

As shown in FIG. 2F, a resin forming plate (the base material 11 in the first substrate 10 and the base material 21 in the second substrate 20 shown in FIG. 1) is produced by injection molding using the stamper 311 as a die. The base materials 11 and 21 are made of, for example, polycarbonate or glass.

Through the process shown in FIGS. 2A to 2F, the projection and depression patterns or the predetermined shape patterns corresponding to the initial information and the information concerning the recording power are simultaneously formed in the regions corresponding to the calibration and/or program memory areas 3 and the lead-in areas 4 of the first substrate 10 and the second substrate 20.

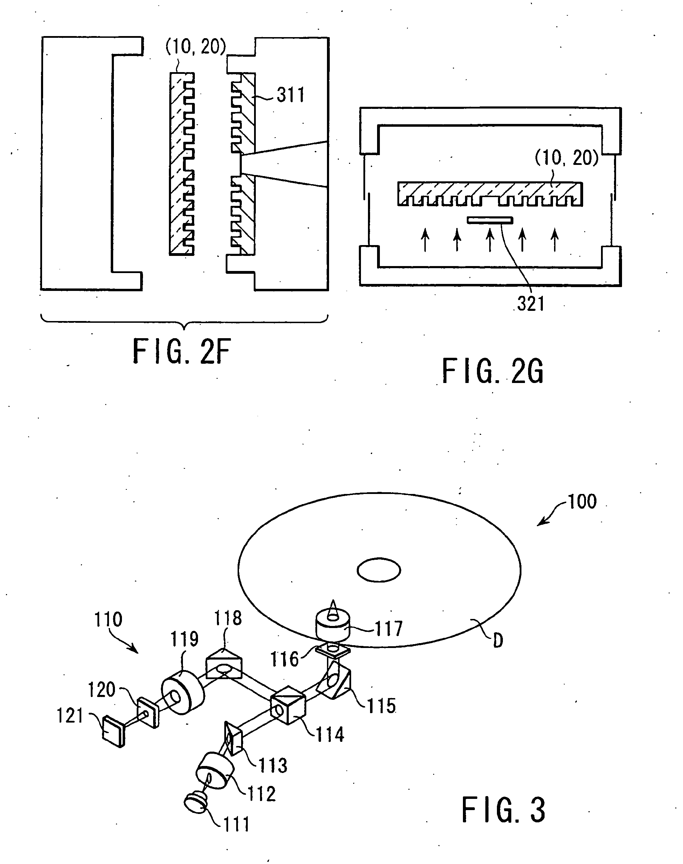

As shown in FIG. 2G, in the forming plate (10 or 20), the region except the region which becomes the recording layer (12, 22) is masked by a mask 321. Then, the single substrate 10 or 20 antecedent to the bonding with the bonding layer 30 is obtained in a manner that deposits metal or alloy suitable to the recording layer on the masked forming plate by, for example, sputtering with the recording layer having a predetermined thickness.

As shown in FIG. 2H, although not described in detail, while one of the single substrates 10 and 20 is mounted on a turntable of a spinner, a predetermined amount of bonding agent which becomes the bonding layer 30, for example, a UV cured resin which is cured by ultraviolet radiation is supplied, and the bonding agent layer having the substantially uniform thickness, that is, a thin layer of the UV cured resin is obtained by rotating the turntable at predetermined speed (see FIG. 2I).

As shown in FIG. 2J, the recording layer is superposed on the substrate to be bonded so that the surface on the side where the recording layer (12 or 22) is formed faces the substrate mounted on the spinner while the bonding layer is previously formed on the substrate.

Then, although not shown, the excess bonding agent located between the both substrates is removed by rotating the turntable of the spinner at high speed (excess bonding agent removing process). As shown in FIG. 2K, the optical disk 1 shown in FIG. 1 is obtained in such a manner that the bonding agent becomes the bonding layer 30 by the ultraviolet radiation.

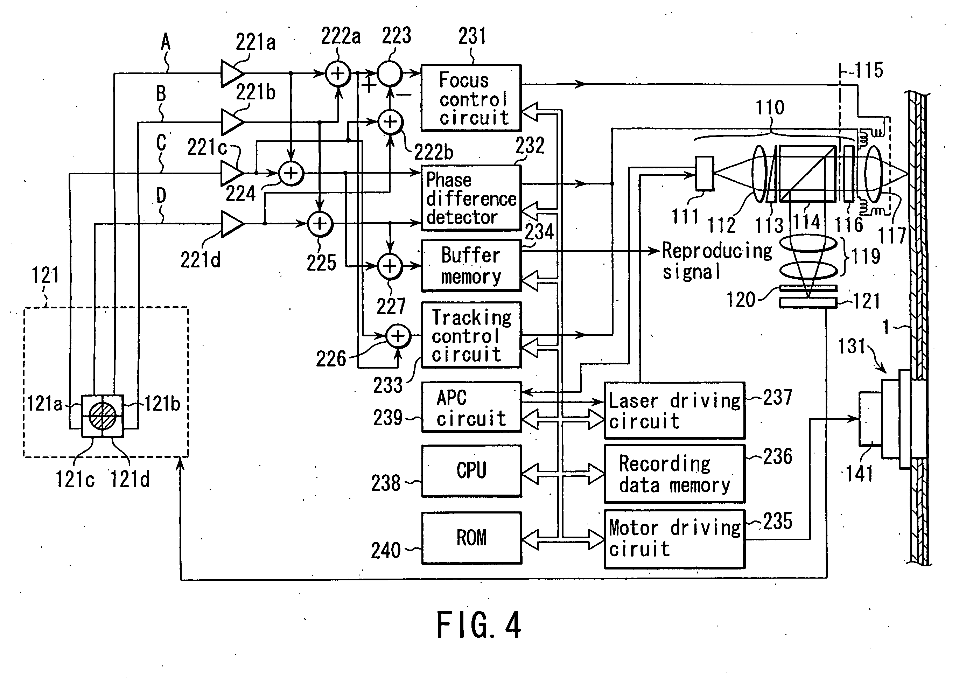

FIGS. 3 and 4 schematically explain the optical disk apparatus, in which the information can be recorded in the optical disk described with FIG. 1 and the information can be reproduced from the optical disk, and the optical head incorporated in the optical disk apparatus.

As shown in FIG. 3, in an optical head 110 of an optical disk apparatus 100, a light beam (laser beam) from a light source, that is, a semiconductor laser device 11 is collimated by a collimating lens 112 and changed in the predetermined sectional beam shape by a beam shaping prism 113.

The laser beam beam-shaped by the beam shaping prism 113 is guided to the optical disk 1 side by a beam splitter 114 and reflected from a mirror 115 to change the direction toward the optical disk 1.

The laser beam directed toward the optical disk 1 by the mirror 115 is converted into circularly polarized light by a quarter-wave plate 116, predetermined convergence is given to the laser beam by an objective lens 117, and the laser beam is focused onto one of the recording layers 12 and 22 of the optical disk 1.

In the case where the information is recorded in the recording layer, the laser beam is reflected from the recording layer 12 or 22 of the optical disk 1 and reflectance or a polarized direction of the laser beam is changed by the information. The reflected laser beam returns to the objective lens 117, and then the reflected laser beam returns to the mirror 115 by rotating the polarized direction by about 90° by the quarter-wave plate 116.

The reflected laser beam which has been returned to the mirror 115 is reflected from the beam splitter 114 and directed toward the predetermined direction by a mirror 118.

After an imaging lens 119 gives predetermined imaging characteristics to the reflected laser beam whose traveling direction is changed by the mirror 118, a wave front of the reflected laser beam is converted by a focus error pattern generating device 120, which can provide a predetermined imaging pattern for use in detection of a focus error, so as to be able to generate a predetermined spot pattern. Then, the reflected laser beam is focused on a light receiving surface in a photodetector 121 of a subsequent step.

Needless to say, well known various methods can be utilized with reference to the method of detecting the focus error and tracking error and the pattern of the light receiving surface and signal processing of the photodetector 121.

Signal processing is performed to the focus error detection pattern and the tracking error detection patter, which are focused on the photodetector 121 in the later-mentioned way by a signal reproducing system shown in FIG. 4. While a position of the objective lens 117 is focus-locked on the position where the objective lens 117 is focused on one of the recording layers 12 and 22 of the optical disk 1, tracking is controlled such that the center of a track or a pit string of the information pit previously formed in the recording layer 12 or 22 corresponds to the center of the laser beam. The reproducing signal is obtained by adding an output of the photodetector 121 as described later.

FIG. 4 is a block diagram illustrating an example of the signal processing system of the optical disk apparatus in which the information can be recorded in the optical disk and reproduced from the optical disk by using the optical disk 1 shown in FIG. 1 and the optical head shown in FIG. 3.

The photodetector 121 includes first to fourth area photodiodes 121A, 121B, 121C, and 121D. Outputs A, B, C, and D of each photodiode are amplified to a predetermined level by first to fourth amplifiers 221a, 221b, 221c, and 221d, respectively.

In the outputs A to D from the amplifiers 221a to 221d, the outputs A and B are added by a first adder 222a and the outputs C and D are added by a second adder 222b. For the outputs of the adders 222a and 222b, the output (A+B) is added to the output (C+D) by changing a sign of the output (C+D), namely the output (C+D) is subtracted from the output (A+B) by an adder 223. The result of the addition (subtraction) by the adder 223 is supplied to a focus control circuit 231 in the form of a focus error signal, in order that the position of the objective lens 117 corresponds to the focal distance between the objective lens 117 and the focal point where the light beam is focused on the track (not shown) or the pit string (not shown) of the recording layer 12 or 22 in the optical disk 1 by the objective lens 117. An adder 224 generates the output (A+C) and an adder 225 generates the output (B+D). The outputs (A+C) and (B+D) of the adders 224 and 225 are inputted to a phase difference detector 232. The phase difference detector 232 is beneficial in obtaining an accurate tracking error signal when the objective lens 117 is shifted.

The sum of the outputs (A+C) and (B+D) is obtained by an adder 226 and output to a tracking control circuit 233 in the form of the tracking error signal. The outputs (A+C) and (B+D) are added by an adder 227 and converted into an (A+B+C+D) signal, that is, the reproducing signal to be input in a buffer memory 234. Intensity of optical feedback of the laser beam emitted from a laser device 111 is inputted into an APC circuit 239. Accordingly, power of the laser beam outgoing from the laser device 111 on the basis of recording data stored in a recording data memory 236 is stabilized.

In the optical disk apparatus 100 having the above-described signal detection system, when the optical disk 1 is mounted on a turn table 131 and the optical head 110 is located at a recording/reproducing position (not shown), a predetermined initial routine is started according to an initial program stored in a ROM 240 under the control of a CPU 238.

For example, while a drive motor 141 is rotated at predetermined speed by supplying a predetermined motor pulse from a motor driving circuit 235, an access motor (not shown) is actuated to move the optical head 110 to the predetermined position in the calibration and/or program memory area 3 or the lead-in area 4 of the optical disk 1.

Then, the laser beam having the reproducing power stabilized by a laser driving circuit 237 and the APC circuit 239 is output from the laser device 111, and the information recorded in the calibration and/or program memory area 3 or the lead-in area 4 of the optical disk 1 is read out.

At this point, various kinds of the information are taken out. The various kinds of the information includes information concerning RIM, and the variations in divergence angle of the laser beam, the variations in wavelength of each laser device, and the shift in wavelength of the laser beam caused by the change in temperature in the case of using the blue-violet laser having the wavelength of 405 nm.

Although the detailed description is omitted, signal reproducing operation, erasing operation, or recording operation is started. In the recording operation, the laser beam having the recording power optimized on the basis of the information concerning RIM, and the variations in divergence angle of the laser beam, the variations in wavelength of each laser device, and the shift in wavelength of the laser beam caused by the change in temperature is output from the laser device 111 such that the optical disk 1 is irradiated with the laser beam.

In the laser beam from the semiconductor laser device 111 described above referring to FIG. 3, it is known that the spread angle in a direction parallel to a junction surface of a laser chip differs from the spread angle in a direction perpendicular to the junction surface. For example, a half total angle ranges from 6 to 10° in the spread angle in the direction parallel to the junction surface, and the half total angle ranges from 22 to 30° in the spread angle in the direction perpendicular to the junction surface.

As described above, while the intensity of the laser beam focused on the recording layer 12 or 22 by the objective lens 117 is proportional to the numerical aperture NA of the objective lens 117 and the wavelength λ of the laser beam, RIM by the aperture edge of the objective lens 117 affects the intensity of the laser beam. In the optical disk apparatus 101, the collimate lens 112 is one which the influence of RIM should be also considered.

For example, as shown in FIG. 5, the relationship between the recording power and CNR is governed by RIM when the information is recorded in the optical disk by using the optical heads having the different RIM values.

RIMr and RIMt shown in FIG. 5 are the RIM values corresponding to a radial direction r of the disk and a tangential direction t of the disk, respectively.

As can be seen from FIG. 5, difference is generated in the optimum recording power by the difference of the RIM value of the optical head 110.

Therefore, when the information is recorded in the optical disk 1, it is preferable to use the recording power optimized on the basis of the information concerning RIM, and the variations in divergence angle of the laser beam, the variations in wavelength of each laser device, and the shift in wavelength of the laser beam caused by the change in temperature.

Accordingly, the information concerning the disk and the power, which are previously recorded in optical disk 1, and the associated information including the characteristics governed by the optical head 110 side and the characteristics of the optical disk side are read out, when the information is recorded in, reproduced from, and erased in the optical disk 1 in the optical disk apparatus 100.

The recording power (including erasing power and reproducing power) is set on the basis of the information read out, the laser beam (light beam) output from the laser device 111 is controlled, and the power of the light beam emitted from the objective lens can be optimized. The information previously recorded in the optical disk 1 may be recorded in the optical disk 1 in the form in which the relationship between the information and the characteristics of the optical head 110 can be decided by the optical disk apparatus 100, even if the information is the information concerning only the power of the light beam which records, erases, and reproduces the information in the optical disk 1 corresponding to the variations in the optical head 110.

An example of the information to be recorded in the optical disk will be sequentially described below.

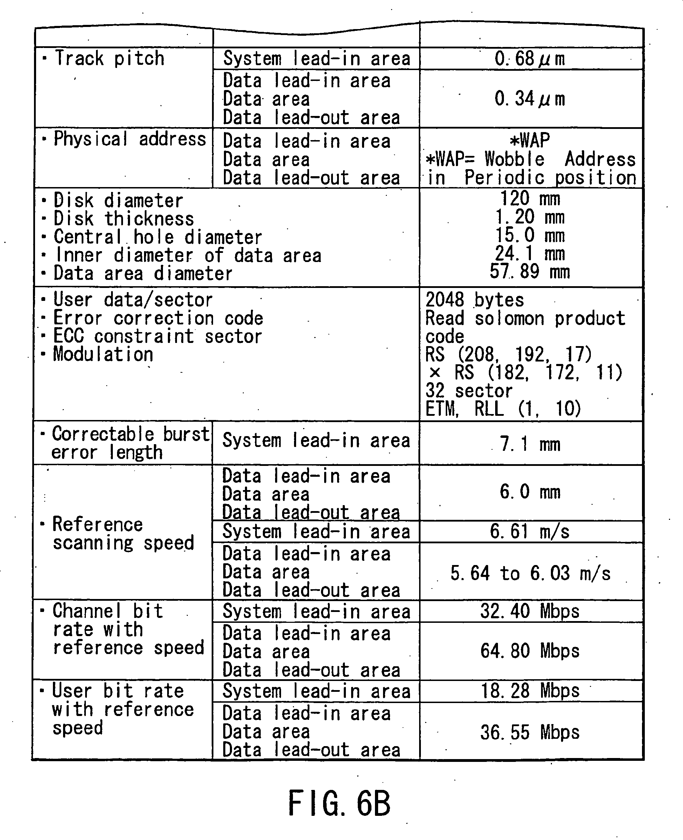

A data arrangement structure which is previously formed with a predetermined recording data density as shown in FIGS. 6A and 6B have been transferred to the area corresponding to the lead-in area 4 in the optical disk 1 at the time when the stamper 311 described by using FIG. 2E is formed.

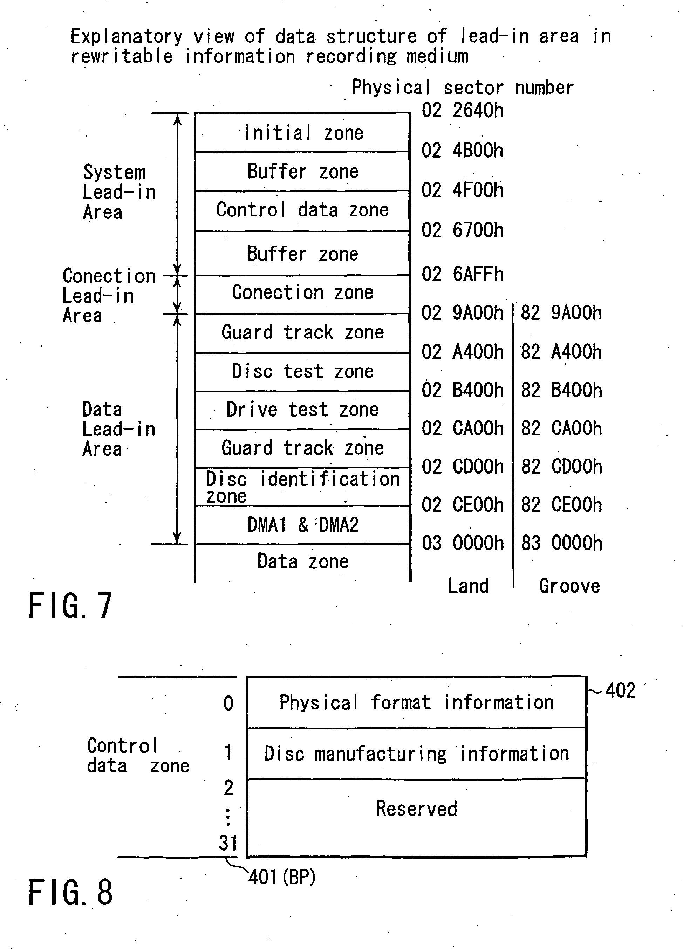

As shown in FIG. 7, the lead-in area 4 includes a system lead-in area (from physical sector number [02 2640h] to physical sector number [02 6AFFh]) and a data lead-in area (from physical sector number [02 9A00h] to physical sector number [03 0000h]) while a connection area (from physical sector number [02 6AFFh] to physical sector number [02 9A00h]) is inserted between the system lead-in area and the data lead-in area.

A control data zone (from physical sector number [02 4A00h] to physical sector number [02 6700h]) is defined in the system lead-in area.

The system lead-in area, the control data zone, and the data lead-in area are previously transferred to the optical disk 1 in the form of an embossing pit string by the above-described stamper 311.

A track in the system lead-in area has a continuous spiral which goes around the track at 360°. The tracks in the data lead-in area, the data area, and the data lead-out area are the spiral which goes around the track at 360°. The center of the track is the center of the pit.

FIG. 8 shows an example of the information to be recorded in the control data zone.

As described above, the power of the laser beam (light beam) output from the laser device 111 (see FIG. 1) is optimized on the basis of the information previously recorded (transferred) on the optical disk 1 side in such a manner that, that is, physical format information and disk manufacturer information are recorded in the predetermined order as information contents 402 in a BP (byte position) string 401.

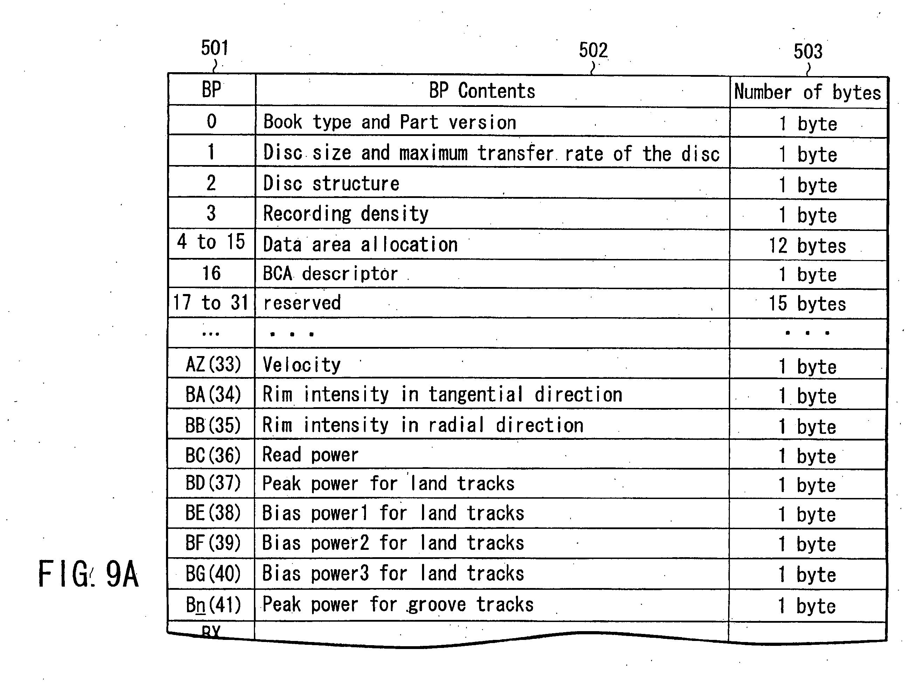

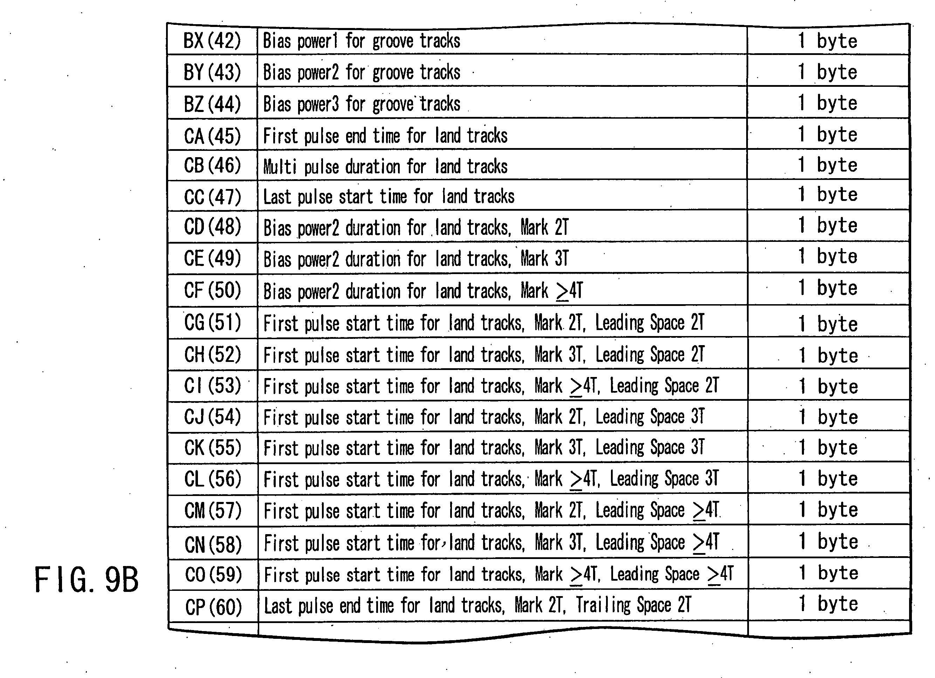

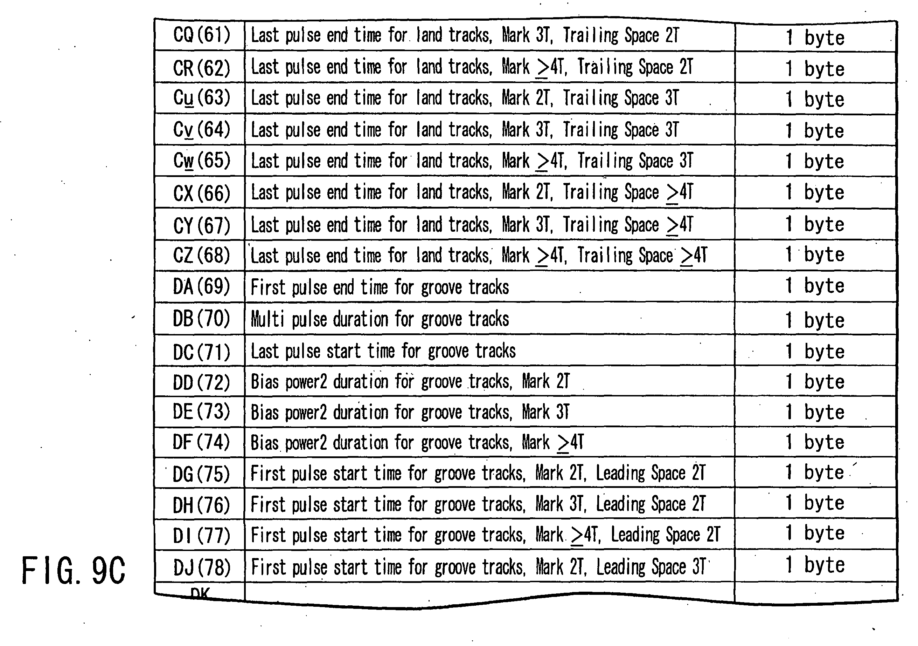

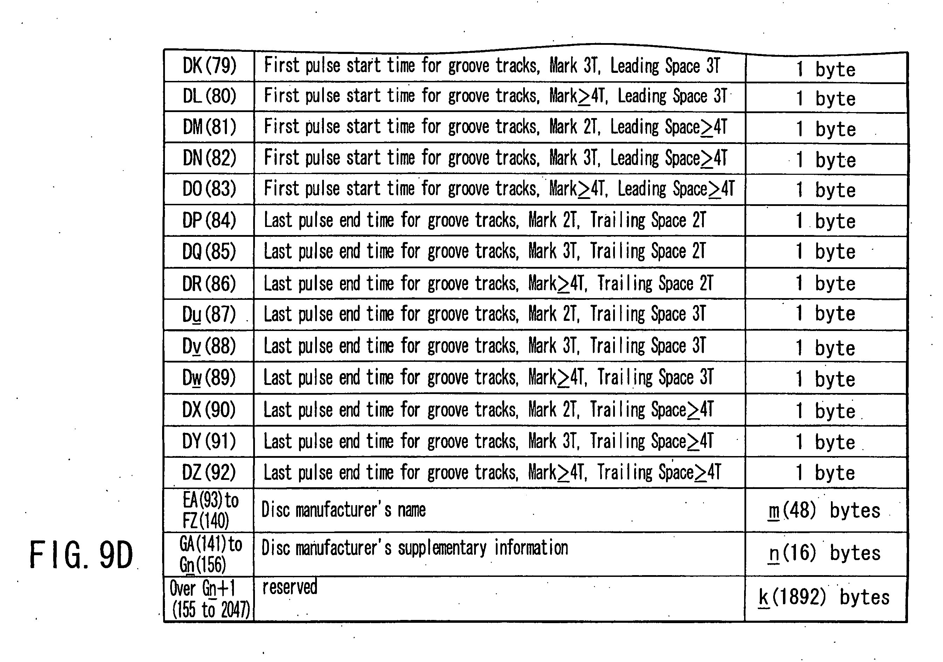

FIGS. 9A to 9D are schematic views illustrating the information to be recorded in the system lead-in area, the control data zone, and the data lead-in area shown in FIG. 7.

The information explained by FIGS. 9A to 9D is recorded (transferred) continuously or in unit in which a BP (byte position) string 501 having a predetermined amount is divided at an arbitrary position. In FIGS. 9A to 9D, rows of "0" to "31" in the BP string 501 are the area where common information among the read-only disk, the write-once disk, and the rewritable RAM disk is recorded. The rows of "32" to "2047" in the BP string 501 are the area where specific information given to each of the read-only disk, the write-once disk, and the rewritable RAM disk is recorded.

In the row after the row of "31" of the BP string 501, for example, the information concerning speed is recorded in the row of "AZ(33)". It is assumed that an alphabet shown in the tens place corresponds to priority of the recorded information, and the information is read out in the alphabet order when the information of the lead-in area 4 is reproduced. In the case where the alphabet shown in the ones place in a character string having double figures is a capital character, it is assumed that the recorded information is continuous according to the alphabet order. On the other hand, in the case where the alphabet shown in the ones place in the character string having the double figures is a small letter, it is indicated that arbitrary information may be added to the information in the position antecedent to and after the information.

The information concerning RIM intensity in the tangential direction is recorded in a row of "BA(34)" after the row of "AZ(33)". The information concerning RIM intensity in the radial direction is recorded in a row of "BB(35)" after the row of "BA(34)".

Read power, peak power for land tracks, bias power 1 for land tracks, bias power 2 for land tracks, and bias power 3 for land tracks are recorded in order of the rows of "BC(36)", "BD(37)", "BE(38)", "BF(39)", and "BG(40)", respectively. Peak power for groove tracks, bias power 1 for groove tracks, bias power 2 for groove tracks, bias power 3 for groove tracks and the like are recorded in order of the rows of "Bn", "BX", "BY", and "BZ".

First pulse end time for land tracks, multi pulse duration for land tracks, last pulse start time for land tracks, and the like are recorded in order in the range of a row of "CA" to a row of "CZ". First pulse end time for groove tracks, multi pulse duration for groove tracks, last pulse start time for groove tracks, and the like are recorded in order in the range of a row of "DA" to a row of "DZ".

The information representing the frequency pertinent to the optical head the RIM value may be recorded in a recording region preceding the region in which the information showing the laser power and the like is recorded. In this case, it is easy to calculate the intensity for the laser beam that is actually applied to record data.

Part of the control information recorded (transferred) in the system lead-in area of the optical disk, for example, first pulse end time for land tracks, multi pulse duration for land tracks, last pulse start time for land tracks, first pulse end time for groove tracks, multi pulse duration for groove tracks, last pulse start time for groove tracks, and the like which are described in the range of the row of "CA(45)" to the row of "DZ(92)" have compatibility with Standard ECMA-330 which is a standard of the DVD rewritable disk, that is, the standard of the RAM disk. Almost pieces of the control information described in some rows in the control information recorded in the range of the row of "BA" to the row of "BZ" also have compatibility with Standard ECMA-330 which is the standard of the RAM disk.

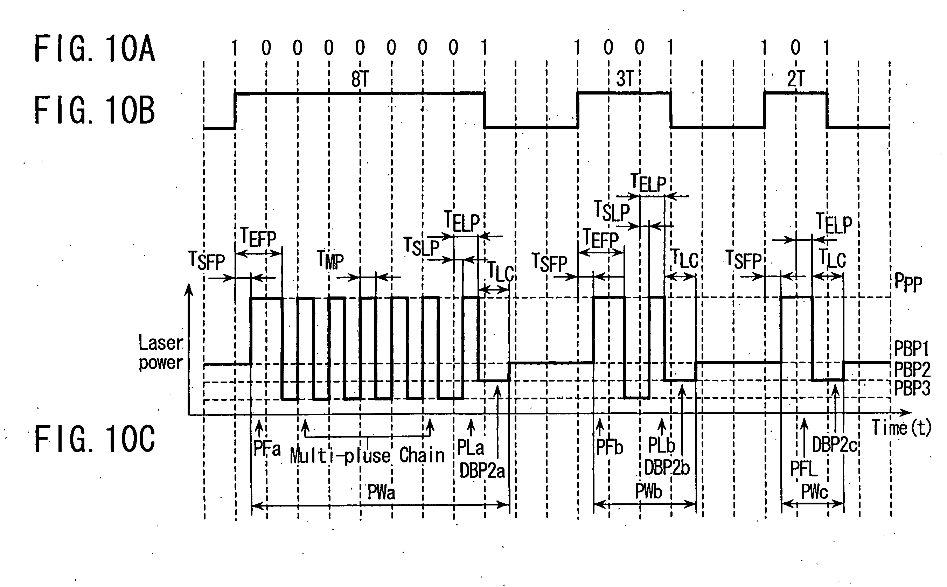

FIGS. 10A, 10B, and 10C show recording data, a recording waveform, and a writing pulse for recording the recording waveform shown in FIG. 10B in the optical disk 1, respectively.

The recording waveform (FIG. 10B) in the NRZI form corresponding to the recording data (FIG. 10A) which is the information to be recorded is recorded in the optical disk 1 using the write pulse shown in FIG. 10C.

The write pulse shown in FIG. 10C corresponds to each recording condition described above by using FIGS. 9A to 9D. For example, correspondence between each piece of the information recorded in the range of the row of "CA" to the row of "DZ" of the BP string 501 and the light beam, that is, the write pulse is shown in FIG. 10C.

Explaining the main writing pulses, peak powers recorded in the rows of "BD" and "Bn" respectively corresponds to peak power Ppp except the conditions for the land tracks and groove tracks.

Similarly, bias power 1 for land tracks and bias power 1 for groove tracks recorded in the rows of "BE" and "BX" correspond to $P_{BP1}$. Bias power 2 for land tracks and bias power 2 for groove tracks recorded in the rows of "BF" and "BY" correspond to $P_{BP2}$, and bias power 3 for land tracks and bias power 3 for groove tracks recorded in the rows of "BG" and "BZ" correspond to $P_{BP3}$. Bias power 1 followed by $T_{LC}$ indicating the ends of 8T data, 3T data, and 2T data illustrated in FIGS. 10A and 10B is utilized for the predetermined duration until the start of the next data. Bias power 2 has a level of $T_{LC}$ indicating the ends of 8T data, 3T data, and 2T data illustrated in FIGS. 10A and 10B. Bias power 3 has a level of multi pulses in 8T data and 3T data illustrated in FIGS. 10A and 10B. Accordingly, bias power 3 is not utilized for 2T data.

First pulses PFa(8T) and PFb(3T) indicating the start (front end) of writing individual recording data are defined by first pulse end time for land tracks and first pulse end time for groove tracks recorded in the rows of "CA" and "DA". Similarly, first pulses PLa(8T) and PLb(3T) indicating the end (rear end) of writing individual recording data are defined by last pulse end time for land tracks and last pulse end time for groove tracks recorded in the rows of "CC" and "DC". In the case of the 2T family, since the first pulse and the last pulse are expressed by one peak pulse, the first pulse and the last pulse are absent, and $P_{BP3}$ (bias power 3) is used after a mono pulse which is the same waveform as the first pulse.

Needless to say, all the periods between the first pulse and the last pulse are represented by write pulses PWa, PWb, ⋯.

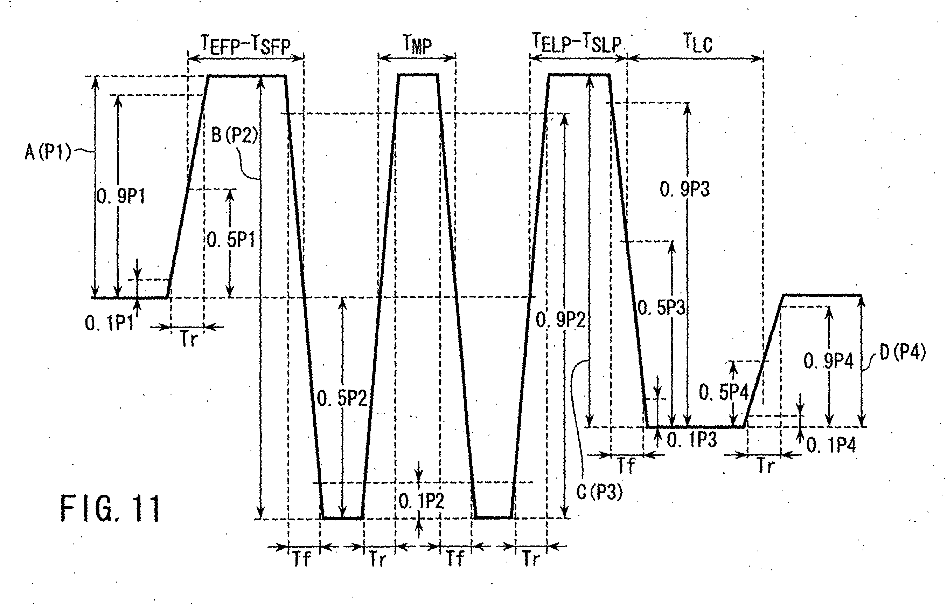

Explaining the waveform of the write pulse in detail, as shown in FIG. 11, difference A between the levels of bias power 1 and peak power, difference B between the levels of peak power and bias power 2, difference C between the levels of peak power and bias power 2, and difference D between the levels of bias power 2 and bias power 1 are indicated by first power $P_1$, second power $P_2$, third power $P_3$, and fourth power $P_4$, respectively. That is, the write pulse shown in FIG. 10C is easily provided by combining the first power $P_1$ to the fourth power $P_4$ illustrated in FIG. 11.

"Disk manufacturer information (manufacturer name)" recorded in the row of "1" in the BP string 401 illustrated in FIG. 8 is recorded in the form of a predetermined code string in the range of the rows of "EA" to "FZ" in the BP string 501. A difference in wavelength of the light beam which is the information concerning large influence on the recording of the information in the optical disk and the reproduction or erasing of the information from the optical disk is recorded in the form of the recording, erasing, or reproducing light beam power corresponding to the wavelength in "disk manufacturer's supplementary information" ranging from the row of "GA" to the row of "Gn". The information of the recording, erasing, or reproducing light beam power corresponding to parameters of the difference in the intrinsic RIM value of the optical heads and the difference in the wavelength of the light beam is also recorded in the range of the row of "GA" to the row of "Gn".

The lead-in area is provided even in the DVD standard optical disk (information recording medium) which is already widely used. In a DVD-ROM which is a read-only recording medium in the DVD standard optical disk, it is said that $\lambda/(4n)$ is the optimum depth in the depth of the pit where the wavelength of the light beam is $\lambda$ and a refractive index of the optical disk (resin material) is n.

In a DVD-RAM which is a rewritable information recording medium, it is said that the depth of the pre-groove having the range of $\lambda/(5n)$ to $\lambda/(6n)$ is optimum in the condition minimizes crosstalk (leakage of the reproducing signal) from a recording mark of the adjacent tracks in the data area.

Accordingly, in the DVD-RAM, the depth of the pit of the embossed lead-in area is also set in the range of $\lambda/(5n)$ to $\lambda/(6n)$.

The reproducing signal having sufficiently large amplitude can be obtained from the pit having the depth of $\lambda/(5n)$ or the depth ranging from $\lambda/(5n)$ to $\lambda/(6n)$, because the pit having the depth of $\lambda/(5n)$ or the depth ranging from $\lambda/(5n)$ to $\lambda/(6n)$ is sufficiently deep.

Conversely, in the DVD-R (write-once) disk, since the depth of the groove in the data area is shallow compared with the DVD-RAM, there is a problem that the reproducing signal having sufficiently large amplitude can not be obtained from the pit in the embossed lead-in area having the same depth as that of the data area and the reproduction is not stable.

Therefore, in order to secure the stable reproducing signal from the lead-in area of the write-once information recording medium while the compatibility of format for all of the read-only, write-once, and rewritable information recording media, the embodiment is characterized in that the system lead-in area is provided and the track pitch and minimum pit pitch in the system lead-in area are greatly enlarged compared with the track pitch and minimum pit pitch (minimum mark pitch) in the data lead-in area and the data area.

Currently, in order to obtain the reproducing signal from the DVD standard optical disk, the reproducing signal is detected (the binary reproducing signal is output) by a level slice method.

However, even in the current DVD standard optical disk, the minimum pit pitch of the micro-projection and depression-shaped pit or the minimum mark pit of the recording mark formed by a change in optical characteristics of the recording layer is close to a cut-off frequency of OTF (optical transfer function) characteristics of the objective lens 117 used in the optical head 110, the amplitude of the reproducing signal from the minimum pit pitch or the minimum mark pit is very small.

However, the method in which the recording density is increased by shortening the minimum pit pitch or the minimum mark pit has been proposed, it is impossible in the level slice method to obtain a reproducing signal from the minimum pit pitch or the minimum mark pit whose pitch is shorter than that of the current DVD standard optical disk. In the DVD-R optical disk, since the minimum pit pitch is already shortened due to the above described reason, it is difficult to obtain a stable reproducing signal from the lead-in area.

In the embodiment, in order to solve this contradictory problem,

[α] The lead-in area is divided into the system lead-in area and the data lead-in area, and the track pitch and the minimum pit pitch of the system lead-in area and the data lead-in area are changed.

[β] The decreased amount of the amplitude of the reproducing signal from the minimum pit pitch to the amplitude from track pitch is reduced by largely extending the track pitch and the minimum pit pitch in the system lead-in area, thereby the signal from the minimum pit is easily reproduced and the signal from the system lead-in area can be reproduced in the write-once information recording medium having the shallow pit depth.

[γ] In order to increase the recording densities of the lead-in area and the data area for the purpose of increasing storage capacity of the information recording medium itself, the minimum pit pitch or the minimum mark pit is shortened, and a PRML method is adopted by substituting for the current level slice method which is difficult to detect the reproducing signal (to digitize the analog signal).

[δ] A modulation method suitable for improvement of the recording density is adopted by shortening the minimum pit pitch or the minimum mark pit.

That is, in the current DVD optical disk, the above four methods which use a modulation rule of d=1 for d=2 are combined for the minimum number (a value of d under (d, k) constraint after the modulation) in which "0"s after the modulation continue.

The provision of the divided system lead-in area and data lead-in area can change the track pitch and the minimum pit pitch of the system lead-in area and the data lead-in area, and the track pitch and the minimum pit pitch can be lengthened in the system lead-in area.

As described above, in the optical disk 1 of the invention, the information showing the recording light beam power corresponding to the RIM value of the optical head 110 is previously recorded in the predetermined area of the optical disk 1, for example, the calibration and/or program memory area 3 or the lead-in area 4, so that the information can be recorded with the optimum power by obtaining the recording power information according to the initial program stored in the ROM 240 with the signal processing system shown in FIG. 4.

Actually, since there may be the case in which it is not necessary to indicate the RIM value and the function of the power in detail, for example, the following information may be suitable.

$$\text{RIMr} \leq 0.65, \text{ RIMt} \leq \text{o.65} \rightarrow \text{Pw} = 4.8 \text{ mW},$$

$$\text{RIMr} > 0.65, \text{ RIMt} > \text{o.65} \rightarrow \text{Pw} = 4.4 \text{ mW}$$

That is, the information which must be recorded in the optical disk is information of the recording light beam power in which the optimum condition can be provided without being governed by the variations in the optical heads affecting the state of the light beam with which the optical disk is irradiated. The information of the recording light beam power may be a function expressing the relationship of the power or the LUT (look-up table) form shown in TABLE 1.

TABLE 1

| RIMr\RIMt | 0.55≦0.60 | 0.60≦0.65 | 0.55≦0.70 | 0.70≦0.75 |
|---|---|---|---|---|
| 0.55≦0.60 | 5.2 | 5 | 4.8 | 4.6 |
| 0.60≦0.65 | 5 | 4.8 | 4.6 | 4.4 |
| 0.55≦0.70 | 4.8 | 4.6 | 4.4 | 4.4 |
| 0.70≦0.75 | 4.6 | 4.4 | 4.4 | 4.2 |

The information recorded in the optical disk, that is, the control information may be a file having a compressed format which can be easily decompressed only with the optical disk apparatus.

In the case where the variations in the wavelength of the light beam output from the optical head 110 largely affects the recording, reproducing, or erasing of the information in the optical disk, it is preferable to previously record the power of the recording, erasing, or reproducing light beam corresponding to the wavelength in the optical disk 1.

When the variations in the RIM value of the optical head 110 and the variations in the wavelength of the light beam largely affect the recording, reproducing, or erasing of the information in the optical disk, it is preferable to previously record the power of the recording, erasing, or reproducing light beam corresponding to the parameters of both the RIM value and the variations in the wavelength in the optical disk 1. Sometimes the optical disk apparatus is used at high temperature or low temperature.

In the laser beam, generally the wavelength is enlarged as the temperature is raised, so that sometimes the characteristics of the optical head 110 are changed by the rise in temperature. Sometimes the recording, erasing, or reproducing light beam power also has a dependence on the temperature. In this case, it may be advisable to previously record the power of the recording, erasing, or reproducing light beam corresponding to the temperature in the optical disk 1.

As described above, in the case where the parameters of the RIM value, the variations in the wavelength, and the temperature of the apparatus largely affect the recording, reproducing, or erasing of the information in the optical disk, it may be advisable to previously record the power of the recording, erasing, or reproducing light beam corresponding to all the parameters in the optical disk 1.

In the optical disk apparatus 100 shown in FIG. 4, the example in which a program is included for reading the above-described "information capable of smoothing out the variations in the wavelength of the laser beam, which cannot be optimized only by the intrinsic information of the optical disk side, and the variations in the RIM value, which is the factor on the optical disk apparatus side" has been described. However, it is also possible to record simultaneously the program for reading out the above "information capable of smoothing out the variations in the wavelength of the laser beam, which cannot be optimized only by the intrinsic information of the optical disk side, and the variations in the RIM value, which is the factor on the optical disk apparatus side," in the calibration and/or program memory area 3 or the lead-in area 4 of the optical disk 1.

Needless to say, the information recorded previously in the predetermined area of the optical disk may be the laser power or the erasing power for the variations in the RIM value and the variations in the wavelength.

Accordingly, it is possible to record more optimally the information in the optical disk with the recording light beam power which can smooth out the variations in the wavelength of the laser beam, which cannot be optimized only by the intrinsic information of the optical disk side, and the variations in the RIM value, which is the factor on the optical disk apparatus side.

In consideration of the routine in which the information is reproduced from the optical disk with the optical disk apparatus, the lead-in area where the information is initially read out is suitable for the area where the information capable of smoothing out the variations in the wavelength of the laser beam, which cannot be optimized only by the intrinsic information of the optical disk side, and the variations in the RIM value, which is the factor on the optical disk apparatus side, should be recorded. However, any area of the optical disk may be the area in which the information should be recorded as long as the information can be read out until the information is actually recorded.

The information capable of smoothing out the variations in the wavelength of the laser beam, and the variations in the RIM value, which is the factor on the optical disk apparatus side, may be recorded in each disk with, for example, the recording laser beam after forming the optical disk.

Moreover, the information capable of smoothing out the variations in the wavelength of the laser beam, which cannot be optimized only by the intrinsic information of the optical disk side, and the variations in the RIM value, which is the factor on the optical disk apparatus side, may be recorded in the disk having two layers of a first layer and a second layer while the information is divided into the first layer and the second layer. For example, the information capable of smoothing out the variations in the wavelength of the laser beam, which cannot be optimized only by the intrinsic information of the optical disk side, and the variations in the RIM value, which is the factor on the optical disk apparatus side, and the position of the information may be recorded in the first layer, and the information itself capable of smoothing out the variations in the wavelength of the laser beam, which cannot be optimized only by the intrinsic information of the optical disk side, and the variations in the RIM value, which is the factor on the optical disk apparatus side, may be recorded in the second layer.

The information concerning at least the RIM value of the optical head and the recording, reproducing, erasing light beam power may be recorded in at least the optical disk. In this case, the information to be recorded in the optical disk can be decreased. That is, in the case where the recording and reproducing are performed with the optical disk apparatus, the optimum recording condition can be derived by reading out the RIM value recorded in the optical disk and the recording condition, and comparing the RIM value of the optical disk apparatus to the RIM value recorded in the optical disk.

Accordingly, the recording light beam power and the like correspond to the beam diameter used in the recording and reproducing the information, and the beam diameter corresponds to the RIM value, so that the recording light beam power can be calculated from the difference between the RIM values.

The invention is not limited to the above-described embodiments, and it is possible that various changes and modifications may be made in the invention without departing from the sprit and scope thereof. The invention may be achieved by properly combining each embodiment as much as possible. In that case, the combined effect can be obtained.

As described above in detail, the optical disk according to the invention has the recording area where the optimum condition is recorded without being governed by the variations in the optical heads affecting the state of the light beam with which the optical disk is irradiated. Accordingly, the optical disk is irradiated with the optimum light beam for the characteristics of the optical disk mounted on the optical disk apparatus in the initial operation of the optical disk apparatus, so that the information can be stably recorded, reproduced, and erased.

In the optical disk apparatus, the program referring to the recording area of the optimum condition recorded in the optical disk is prepared in the initial operation after the optical disk is mounted on the optical disk apparatus, so that the information can be recorded, reproduced, and erased under the optimum condition without being governed by the variations in the optical heads affecting the state of the light beam with which the optical disk is irradiated. Further, the information can be recorded, reproduced, and erased under the optimum condition without the influence of the variations in the characteristics of the optical head caused by the change in temperature of the optical disk apparatus and without being governed by the variations in the optical heads affecting the state of the light beam with which the optical disk is irradiated.

In addition, according to the invention, productivity of the optical head and the manufacturing margin of the optical disk can be widely taken, and the optical disk apparatus and the optical disk system can be obtained at low cost.

The present invention is not limited to the embodiments described above and can be modified in various manners without departing from the spirit and scope of the invention.

For example, the present invention can provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information.

The present invention can also provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information, wherein the condition to be recorded in the second recording area includes a condition necessary to be associated with an intrinsic factor of the optical head among pieces of intrinsic information of the optical disk.

The present invention can further provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information, wherein the condition includes a condition concerning intensity of the light beam corresponding to intrinsic RIM intensity of the optical disk.

Still further, the present invention can provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information, wherein the condition includes a condition corresponding to a wavelength of light of a light source incorporated in the optical head.

Further another, the present invention can provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information, wherein the condition includes a condition associated with ambient temperature.

Still further, the present invention can provide an optical disk capable of recording and reproducing information with a light beam, having, a first recording area in which the information can be recorded with light radiation, and a second recording area in which an optimum condition of the light beam is recorded in order to record the information on the optical disk and reproduce the information from the optical disk corresponding to characteristics of an optical head for use in recording and reproducing the information, wherein the second recording area also serves as a lead-in area of the optical disk.

Further another, the present invention can provide an optical disk apparatus having, an optical head device including a light source which outputs a light beam having a predetermined wavelength, a collimating lens of an optical element which guides and focuses the light beam from the light source to a predetermined recording area of a recording medium, and an objective lens which focuses the light beam at a predetermined position of the recording medium, a program retaining device in which a control program for reading out information concerning intensity of the light beam for recording the information on the recording medium, reproducing the information from the recording medium, or erasing the information recorded in the recording medium is recorded, the information is defined by a focal distance of the collimating lens, a wavelength and a spread angle of the light beam from the light source, and a numerical aperture NA and the focal distance of the objective lens, and a light source driving device which reads out the intensity of the light beam from the recording medium according to the control program recorded in the program retaining device and optimizes the intensity of the light beam from the light source.

**Claims**

1. An optical disk (1) capable of recording or reproducing information with a light beam of an optical head, comprising:

   a first recording area (5) in which first information can be recorded by the optical head; and
   a second recording area (4) in which second information is recorded;
   **characterized in that**
   the second information of the optical head includes RIM intensity and information usuable for calculation of laser power for recording in order to record the first information on the optical disk, and is recorded in a recording region preceding a region in which information showing laser power for reading is recorded..

2. An optical disk (1) according to claim 1, **characterized in that** the second information is recorded in the region as a pre-pit.

3. A method for reproducing data from an optical disk comprising:

   setting power of a laser beam output from a laser element to be for non-recording use and non-erasing use;

acquiring RIM intensity from a data region provided in an inner radial direction of the optical disk, the RIM intensity being recorded in the data region preceding a region in which information showing laser power for reading is recorded; and

acquiring data concerning said non-recording use and non-erasing use to set non-recording and non-erasing power.

4. A method for recording data on an optical disk comprising:

setting power of a laser beam output from a laser element to be for non-recording use and non-erasing use;

acquiring RIM intensity from a data region provided in an inner radial direction of the optical disk, the RIM intensity being recorded in the data region preceding a region in which information showing laser power for reading is recorded; and

acquiring data concerning recording use and erasing use to set recording and erasing laser power.

**Patentansprüche**

1. Optikplatte (1), die im Stande ist, Information mit einem Lichtstrahl eines optischen Kopfes aufzuzeichnen oder wiederzugeben, mit:

einem ersten Aufzeichnungsbereich (5), in dem erste Information durch den optischen Kopf aufgezeichnet werden kann; und

einem zweiten Aufzeichnungsbereich (4), in dem zweite Information aufgezeichnet ist;

**dadurch gekennzeichnet, dass**

die zweite Information des optischen Kopfes RIM-Intensität und Information aufweist, die zur Berechnung von Laserleistung zum Aufzeichnen verwendbar ist, um die erste Information auf der Optikplatte aufzuzeichnen, und die in einer Aufzeichnungsregion aufgezeichnet ist, die einer Region vorangeht, in der Information aufgezeichnet ist, die Laserleistung zum Lesen zeigt.

2. Optikplatte (1) gemäß Anspruch 1, **dadurch gekennzeichnet, dass** die zweite Information in der Region als ein Pre-Pit aufgezeichnet wird.

3. Verfahren zum Wiedergeben von Daten von einer Optikplatte, mit:

Einstellen der Leistung eines von einem Laserelement ausgegebenen Laserstrahls, für Nicht-Aufzeichnungsverwendung und Nicht-Löschverwendung;

Erfassen der RIM-Intensität von einer Datenregion, die in einer inneren radialen Richtung der Optikplatte bereitgestellt ist, wobei die RIM-Intensität in der Datenregion aufgezeichnet ist, die einer Region vorangeht, bei der Information aufgezeichnet ist, die Laserleistung zum Lesen zeigt; und

Erfassen von Daten hinsichtlich der Nicht-Aufzeichnungsverwendung und Nicht-Löschverwendung, um die Nicht-Aufzeichnungs- und Nicht-Löschleistung einzustellen.

4. Verfahren zum Aufzeichnen von Daten auf einer Optikplatte, mit:

Einstellen der Leistung eines von einem Laserelement ausgegebenen Laserstrahls für Nicht-Aufzeichnungsverwendung und Nicht-Löschverwendung;

Erfassen der RIM-Intensität von einer Datenregion, die in einer inneren radialen Richtung der Optikplatte bereitgestellt ist, wobei die RIM-Intensität in der Datenregion aufgezeichnet ist, die einer Region vorangeht, bei der Information aufgezeichnet ist, die Laserleistung zum Lesen zeigt; und

Erfassen von Daten hinsichtlich der Aufzeichnungsverwendung und Löschverwendung, um Aufzeichnungs- und Löschlaserleistung einzustellen.

**Revendications**

1. Disque optique (1) capable d'enregistrer ou de reproduire des informations avec un faisceau lumineux d'une tête optique, comprenant :

une première zone d'enregistrement (5) dans laquelle des premières informations peuvent être enregistrées par la tête optique ; et
une seconde zone d'enregistrement (4) dans laquelle des secondes informations sont enregistrées ;
**caractérisé en ce que**
les secondes informations de la tête optique comprennent une intensité RIM et des informations utilisables pour le calcul d'une puissance laser d'enregistrement permettant d'enregistrer les premières informations sur le disque optique, et sont enregistrées dans une région d'enregistrement précédant une région dans laquelle des informations indiquant une puissance laser de lecture sont enregistrées.

2. Disque optique (1) selon la revendication 1, **caractérisé en ce que** les secondes informations sont enregistrées dans la région comme un pré-creux.

3. Procédé de reproduction de données à partir d'un disque optique comprenant:

la définition de la puissance d'un faisceau laser provenant d'un élément laser destiné à être utilisé pour un non enregistrement et un non effacement;
l'acquisition d'une intensité RIM à partir d'une région de données prévue dans une direction radiale interne du disque optique, l'intensité RIM étant enregistrée dans la région de données précédant une région dans laquelle des informations indiquant une puissance laser de lecture sont enregistrées ; et
l'acquisition de données concernant ladite utilisation de non enregistrement et ladite utilisation de non effacement afin de définir une puissance de non enregistrement et de non effacement.

4. Procédé d'enregistrement de données sur un disque optique comprenant :

la définition de la puissance d'un faisceau laser provenant d'un élément laser destiné à être utilisé pour un non enregistrement et un non effacement ;
l'acquisition d'une intensité RIM à partir d'une région de données prévue dans une direction radiale interne du disque optique, l'intensité RIM étant enregistrée dans la région de données précédant une région dans laquelle des informations indiquant une puissance laser de lecture sont enregistrées ; et
l'acquisition de données concernant une utilisation d'enregistrement et une utilisation d'effacement afin de définir une puissance laser d'enregistrement et d'effacement.

FIG. 1

FIG. 2A

FIG. 2B

FIG. 2C ↓ Expose

FIG. 2D

FIG. 2E

(10, 20)

311

FIG. 2F

(10, 20)

321

FIG. 2G

100

110

119

118

120

121

112

111

113

114

115

116

117

D

FIG. 3

FIG. 2H

FIG. 2I

FIG. 2J

FIG. 2K

FIG. 4

FIG. 5

Explanatory view of recording data density in each area of rewritable information recording medium

| Parameter | | Single layer |
|---|---|---|
| · User data capacity | | 20 Gbytes/side |
| · Wavelength of laser diode<br>· Numerical aperture of objective lens | | 405 nm<br>0.65 |
| · Data bit length | System lead-in area | 0.306 $\mu$m |
| | Data lead-in area<br>Data area<br>Data lead-out area | 0.130 to 0.140 $\mu$m |
| · Channel bit length | System lead-in area | 0.204 $\mu$m |
| | Data lead-in area<br>Data area<br>Data lead-out area | 0.087 to 0.093 $\mu$m |
| · Minimum mark length (2T) | System lead-in area | 0.408 $\mu$m |
| | Data lead-in area<br>Data area<br>Data lead-out area | 0.173 to 0.187 $\mu$m |
| · Maximum mark length (13T) | System lead-in area | 2.652 $\mu$m |
| | Data lead-in area<br>Data area<br>Data lead-out area | 1.126 to 1.213 $\mu$m |

FIG. 6A

| · Track pitch | System lead-in area | 0. 68 μm |
|---|---|---|
| | Data lead-in area<br>Data area<br>Data lead-out area | 0. 34 μm |
| · Physical address | Data lead-in area<br>Data area<br>Data lead-out area | *WAP<br>*WAP= Wobble Address<br>in Periodic position |
| · Disk diameter<br>· Disk thickness<br>· Central hole diameter<br>· Inner diameter of data area<br>· Data area diameter | | 120 mm<br>1. 20 mm<br>15. 0 mm<br>24. 1 mm<br>57. 89 mm |
| · User data/sector<br>· Error correction code<br>· ECC constraint sector<br>· Modulation | | 2048 bytes<br>Read solomon product<br>code<br>RS (208, 192, 17)<br>× RS (182, 172, 11)<br>32 sector<br>ETM, RLL (1, 10) |
| · Correctable burst<br>error length | System lead-in area | 7. 1 mm |
| · Reference<br>scanning speed | Data lead-in area<br>Data area<br>Data lead-out area | 6. 0 mm |
| | System lead-in area | 6. 61 m/s |
| | Data lead-in area<br>Data area<br>Data lead-out area | 5. 64 to 6. 03 m/s |
| · Channel bit<br>rate with<br>reference speed | System lead-in area | 32. 40 Mbps |
| | Data lead-in area<br>Data area<br>Data lead-out area | 64. 80 Mbps |
| · User bit rate<br>with reference<br>speed | System lead-in area | 18. 28 Mbps |
| | Data lead-in area<br>Data area<br>Data lead-out area | 36. 55 Mbps |

## FIG. 6B

Explanatory view of data structure of lead-in area in
rewritable information recording medium

Physical sector number

| System Lead-in Area | Initial zone | 02 2640h | |
|---|---|---|---|
| | Buffer zone | 02 4B00h | |
| | Control data zone | 02 4F00h | |
| Conection Lead-in Area | Buffer zone | 02 6700h | |
| | Conection zone | 02 6AFFh | |
| Data Lead-in Area | Guard track zone | 02 9A00h / 82 9A00h | |
| | Disc test zone | 02 A400h / 82 A400h | |
| | Drive test zone | 02 B400h / 82 B400h | |
| | Guard track zone | 02 CA00h / 82 CA00h | |
| | Disc identification zone | 02 CD00h / 82 CD00h | |
| | DMA1 & DMA2 | 02 CE00h / 82 CE00h | |
| | Data zone | 03 0000h / 83 0000h | |

Land    Groove

## FIG. 7

| | | | ~402 |
|---|---|---|---|
| Control data zone | 0 | Physical format information | |
| | 1 | Disc manufacturing information | |
| | 2 ⋮ 31 | Reserved | |

401 (BP)

## FIG. 8

FIG. 9A

| BP | BP Contents | Number of bytes |
|---|---|---|
| 0 | Book type and Part version | 1 byte |
| 1 | Disc size and maximum transfer rate of the disc | 1 byte |
| 2 | Disc structure | 1 byte |
| 3 | Recording density | 1 byte |
| 4 to 15 | Data area allocation | 12 bytes |
| 16 | BCA descriptor | 1 byte |
| 17 to 31 | reserved | 15 bytes |
| ... | ... | ... |
| AZ(33) | Velocity | 1 byte |
| BA(34) | Rim intensity in tangential direction | 1 byte |
| BB(35) | Rim intensity in radial direction | 1 byte |
| BC(36) | Read power | 1 byte |
| BD(37) | Peak power for land tracks | 1 byte |
| BE(38) | Bias power1 for land tracks | 1 byte |
| BF(39) | Bias power2 for land tracks | 1 byte |
| BG(40) | Bias power3 for land tracks | 1 byte |
| Bn(41) | Peak power for groove tracks | 1 byte |
| BY | | |

501 502 503

EP 1 447 797 B1

EP 1 447 797 B1

| BX (42) | Bias power1 for groove tracks | 1 byte |
|---------|-------------------------------|--------|
| BY (43) | Bias power2 for groove tracks | 1 byte |
| BZ (44) | Bias power3 for groove tracks | 1 byte |
| CA (45) | First pulse end time for land tracks | 1 byte |
| CB (46) | Multi pulse duration for land tracks | 1 byte |
| CC (47) | Last pulse start time for land tracks | 1 byte |
| CD (48) | Bias power2 duration for land tracks, Mark 2T | 1 byte |
| CE (49) | Bias power2 duration for land tracks, Mark 3T | 1 byte |
| CF (50) | Bias power2 duration for land tracks, Mark ≥4T | 1 byte |
| CG (51) | First pulse start time for land tracks, Mark 2T, Leading Space 2T | 1 byte |
| CH (52) | First pulse start time for land tracks, Mark 3T, Leading Space 2T | 1 byte |
| CI (53) | First pulse start time for land tracks, Mark ≥4T, Leading Space 2T | 1 byte |
| CJ (54) | First pulse start time for land tracks, Mark 2T, Leading Space 3T | 1 byte |
| CK (55) | First pulse start time for land tracks, Mark 3T, Leading Space 3T | 1 byte |
| CL (56) | First pulse start time for land tracks, Mark ≥4T, Leading Space 3T | 1 byte |
| CM (57) | First pulse start time for land tracks, Mark 2T, Leading Space ≥4T | 1 byte |
| CN (58) | First pulse start time for land tracks, Mark 3T, Leading Space ≥4T | 1 byte |
| CO (59) | First pulse start time for land tracks, Mark ≥4T, Leading Space ≥4T | 1 byte |
| CP (60) | Last pulse end time for land tracks, Mark 2T, Trailing Space 2T | 1 byte |

FIG. 9B

EP 1 447 797 B1

| CQ (61) | Last pulse end time for land tracks, Mark 3T, Trailing Space 2T | 1 byte |
|---|---|---|
| CR (62) | Last pulse end time for land tracks, Mark ≥4T, Trailing Space 2T | 1 byte |
| Cu (63) | Last pulse end time for land tracks, Mark 2T, Trailing Space 3T | 1 byte |
| Cv (64) | Last pulse end time for land tracks, Mark 3T, Trailing Space 3T | 1 byte |
| Cw (65) | Last pulse end time for land tracks, Mark ≥4T, Trailing Space 3T | 1 byte |
| CX (66) | Last pulse end time for land tracks, Mark 2T, Trailing Space ≥4T | 1 byte |
| CY (67) | Last pulse end time for land tracks, Mark 3T, Trailing Space ≥4T | 1 byte |
| CZ (68) | Last pulse end time for land tracks, Mark ≥4T, Trailing Space ≥4T | 1 byte |
| DA (69) | First pulse end time for groove tracks | 1 byte |
| DB (70) | Multi pulse duration for groove tracks | 1 byte |
| DC (71) | Last pulse start time for groove tracks | 1 byte |
| DD (72) | Bias power2 duration for groove tracks, Mark 2T | 1 byte |
| DE (73) | Bias power2 duration for groove tracks, Mark 3T | 1 byte |
| DF (74) | Bias power2 duration for groove tracks, Mark ≥4T | 1 byte |
| DG (75) | First pulse start time for groove tracks, Mark 2T, Leading Space 2T | 1 byte |
| DH (76) | First pulse start time for groove tracks, Mark 3T, Leading Space 2T | 1 byte |
| DI (77) | First pulse start time for groove tracks, Mark ≥4T, Leading Space 2T | 1 byte |
| DJ (78) | First pulse start time for groove tracks, Mark 2T, Leading Space 3T | 1 byte |

FIG. 9C

EP 1 447 797 B1

| DK (79) | First pulse start time for groove tracks, Mark 3T, Leading Space 3T | 1 byte |
|---|---|---|
| DL (80) | First pulse start time for groove tracks, Mark $\geq$4T, Leading Space 3T | 1 byte |
| DM (81) | First pulse start time for groove tracks, Mark 2T, Leading Space$\geq$4T | 1 byte |
| DN (82) | First pulse start time for groove tracks, Mark 3T, Leading Space$\geq$4T | 1 byte |
| DO (83) | First pulse start time for groove tracks, Mark$\geq$4T, Leading Space$\geq$4T | 1 byte |
| DP (84) | Last pulse end time for groove tracks, Mark 2T, Trailing Space 2T | 1 byte |
| DQ (85) | Last pulse end time for groove tracks, Mark 3T, Trailing Space 2T | 1 byte |
| DR (86) | Last pulse end time for groove tracks, Mark$\geq$4T, Trailing Space 2T | 1 byte |
| Du (87) | Last pulse end time for groove tracks, Mark 2T, Trailing Space 3T | 1 byte |
| Dv (88) | Last pulse end time for groove tracks, Mark 3T, Trailing Space 3T | 1 byte |
| Dw (89) | Last pulse end time for groove tracks, Mark$\geq$4T, Trailing Space 3T | 1 byte |
| DX (90) | Last pulse end time for groove tracks, Mark 2T, Trailing Space$\geq$4T | 1 byte |
| DY (91) | Last pulse end time for groove tracks, Mark 3T, Trailing Space$\geq$4T | 1 byte |
| DZ (92) | Last pulse end time for groove tracks, Mark$\geq$4T, Trailing Space$\geq$4T | 1 byte |
| EA(93) to FZ(140) | Disc manufacturer's name | $\underline{m}$(48) bytes |
| GA(141) to Gn(156) | Disc manufacturer's supplementary information | $\underline{n}$(16) bytes |
| Over Gn+1 (155 to 2047) | reserved | $\underline{k}$(1892) bytes |

FIG. 9D

FIG. 10A

FIG. 10B

FIG. 10C

EP 1 447 797 B1

FIG. 11

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 11178471 A
- US 6487152 B